# EUROPEAN PATENT SPECIFICATION

(11) **EP 0 627 089 B1**
(45) Date of publication and mention of the grant of the patent: **31.10.2001**
(21) Application number: 92905446.8
(22) Date of filing: 21.02.1992
(51) Int. Cl.: G01V 1/18, G01V 1/38, H01B 13/32, H01B 7/24, G01V 1/20

(54) **TOWED ARRAY STREAMER**
GESCHLEPPTES WANDLERKABEL
AGENCEMENT DE CABLE A REMORQUER

(43) Date of publication of application: 07.12.1994
(73) Proprietor: THOMSON MARCONI SONAR PTY LTD, Rydalmere, New South Wales 2116 (AU)
(72) Inventor: HARVEY, Anthony, Peter, Burwood, NSW 2134 (AU)
(74) Representative: de Bruijn, Leendert C.
(86) International application number: AU9200065
(87) International publication number: WO9317354

(56) References cited:
- WO-A-83/00564
- AU-A- 3 176 384
- GB-A- 2 226 690
- GB-A- 2 226 912
- US-A- 3 531 760
- US-A- 3 710 006
- US-A- 3 996 413
- US-A- 4 399 322

## Description

This invention relates to a towed array streamer according to the preamble of claim 1.

Towed array streamers usually comprise an elongate buoyant streamer having spaced along its length the required payload. Streamers are generally made from several shorter modules which are joined together to form the full length, and the modules used along the length have varying structures and are designed to perform different functions. The reason for positioning more than one type of module along the length of the streamer is in part because prevailing ambient conditions and forces associated with towing vary along the length. This invention is especially suited to a module that carries sensors such as hydrophones.

Towed streamers are usually of considerable length and are subject to quite high towing strains and are consequently provided with high tensile or non-compliant strain members to transmit tension along the streamer. The streamers however must also be sufficiently flexible for winching onto a bollard or the like.

The strength members by their very nature are designed to carry a significant portion of the towing load, and it is desirable that the rest of the streamer is subjected to minimal strain.

Streamers are generally of one of two types. One such type are liquid filled and these have been used as a prior ait, and generally have strength members, the pay load and data transmission means within a liquid core with a jacket encapsulating these components. The liquid used in such streamers fills most of the streamer and can be a hydrocarbon such as kerosene. Such streamers are generally less robust than streamers of a generally solid nature, arid generally have a shorter life. Streamers of solid construction however suffer from the disadvantage of having a somewhat reduced sensitivity of the payload. with a far greater noise transmitted by reason of transfer of tension through solid layers onto the sensors either directly or indirectly through data bearer cables connected thereto.

The towed array streamer according to the preamble of claim 1 is known from GB-2,226,690 A. Gel filling is used to provide a void-free fill. From WO 83/00564 a towed streamer is known being impregnated with a low specific gravity gel to obtain void-free filling.

It has been shown that noise is generated by the strength member and the external milieu and the invention aims to overcome this drawback.

It is a further object of this invention to provide a towed streamer that is of solid construction, and has improved isolation of the payload from the stresses that the streamer is subjected to. This object can be achieved by the provision of a layer of gel to isolate data bearers from the remainder of the cable and thereby not providing a solid - solid interface and thereby reduce the transmission of vibration or strain into the data bearer layer.

A difficulty with providing a liquid - solid interface is that the construction of solid cables is from the inside layers to the outside, and thus the gel layer needs to be introduced around for example a buoyant core. The difficulty is that the layer outside of the gel layer Is often not desired to be rigid and therefore the fluid cannot necessarily be pumped into a unfilled area after construction has been completed. Even if that were possible, the provision of a port to allow access to such a layer for filling is somewhat awkward.

The invention aims to obviate the drawbacks described above.
This aim is realized with the characterising features of claim 1.
It is proposed that a gel layer be applied around an inner layer such as the buoyant core and then a further layer, such as a plastics having relatively low melting point properties, be extruded around the gel layer, or alternatively a wrap can be introduced over the gel filled layer, and such wrap can be a paper wrap. The gel is a type that can be theologically modified and generally has more fluid properties when subjected to movement or distortion or elevated temperature, and more gel-like when undisturbed.
Certain types of grease have this property.

A further difficulty arises in that the gel is somewhat difficult to maintain in position around a central core on assembly of the streamer, and requires some support in order to remain in place. The method of making such a layer therefore includes laying of the data bearers first and then coating the gel ove the transmission layers. The data bearers are preferably braided and in addition to beneficial effects on the reduction in strain and vibration transmission such a configuration also provides a more effective support for the gel.

The gel filled layer is provided with further support, with filler members laid in the area to be filled by a gel, such filler members are preferably relatively inert and bear as little strain as possible. In this way further support is provided for the gel, enabling a larger cross-sectional area of gel to be supported, and enhancing the degree to which the data-bearers are isolated from the structural path between the jacket and the core.

The invention also resides in a method of making a towed array streamer as described in claim 6.

### BRIEF DESCRIPTION OF THE DRAWINGS

For a better understanding the invention will now be described with reference to two embodiment which will be described with reference to drawings in which:-

In the drawings:

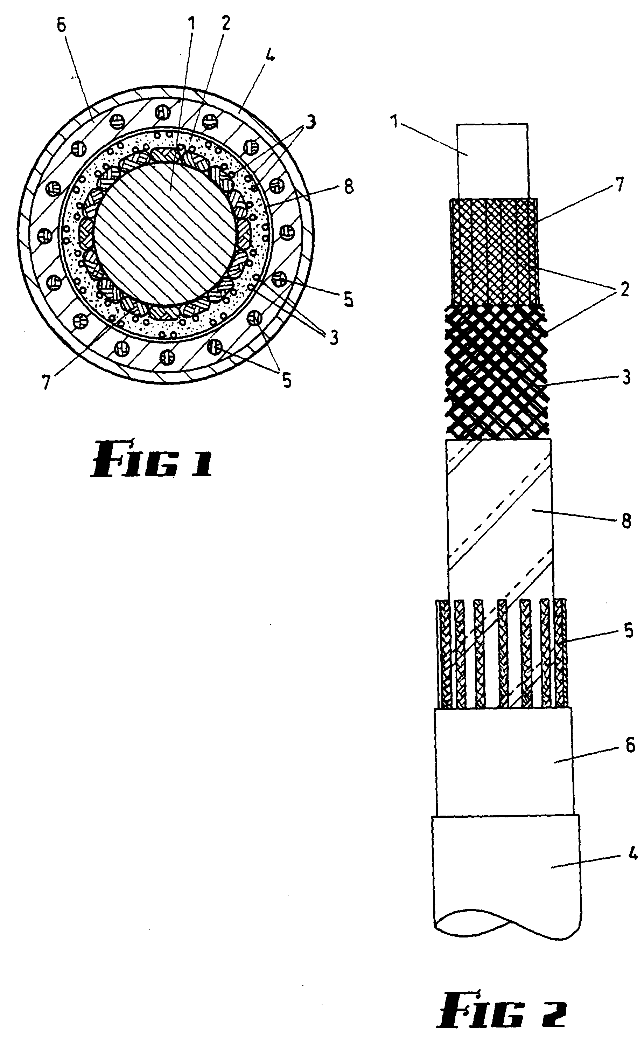

- FIG. 1: Is a somewhat diagrammatic cross-sectional view of a first embodiment of the invention,
- FIG. 2: is a plan view of the first embodiment showing successive layers stripped off,

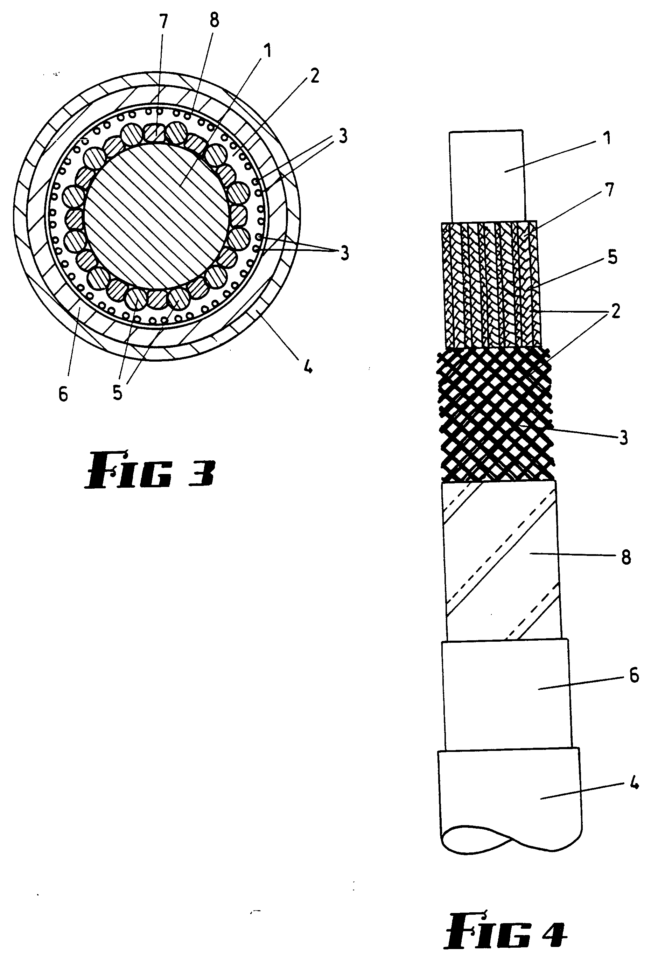

- FIG. 3: Is a somewhat diagrammatic cross-sectional view of a second embodiment of the invention, and
- FIG. 4: is a plan view of the second embodiment showing successive layers stripped off.

### DESCRIPTION OF THE PREFERRED EMBODIMENTS

Similar reference characters indicate corresponding parts throughout the several views of the drawings.

Dimensions of certain of the parts as shown in the drawings may have been modified and/or exaggerated for the purposes of clarity of illustration.

The towed streamer cable is generally of solid construction and includes a buoyant core 1, with a gel filled layer 2 surrounding the buoyant core. The buoyant core in the illustrated embodiments is made from a thermoplastic rubber and functions as a means to maintain the buoyancy of the streamer. The thermoplastics rubber used can also be a neoprene. Data bearers 3 are positioned within the gel filled layer. The data bearers act to transmit data along the streamer. An outer jacket 4 is positioned around the outside of the cable, and encases all the other component layers of the cable. The outer jacket is made in the nature of a water-impermeable somewhat harder plastics and can be made of, for example, thermoplastics polyurethane.

The gel used to form the gel layer is of a friction or heat modifiable type, wherein the rheological characteristics can be modified by heat or friction. A gel the fluidity of which can be dramatically decrease by raising the temperature or by friction is a suitable type. Thus during assembly of the streamer cable the gel is appropriately applied as a rather less fluid form, but whilst *in situ* and in active use takes a rather more fluid form. As an alternative the gel could be applied in a liquid form and cooled to retain its position. The advantage of providing such a gel filled layer is that there is no solid-solid interface between the source of tension or strain and the data bearers. The reduction in the transfer of strain and tension obviously protects the data bearers from breakage, and also has the added advantage of reducing transmission of strain and vibrations along the databearers to the sensors.

Strength members 5 are positioned within the cable and inside of the outer jacket so as to transmit tension along the cable. Such strength members can be made of any appropriate type, and are in the illustrated embodiments of high tensile material such as sold under the trade marks KEVLAR or VECTRAN. In this type of cable the strength members are positioned to give a non-compliant transmission of tension along the cable.

Both of the illustrated embodiments also have an inner jacket layer 6 positioned between the outer jacket and the gel filled layer. Such inner jacket is made of a thermoplastic rubber or similar materials, and is thus more elastic than the outer jacket.

Both of the illustrated embodiments also have within the gel filled layer filler cords 7, laid so as to be aligned longitudinally with the buoyant core 1. Such filler cords in the illustrated embodiments are made of a polypropylene. Such filler cords are somewhat deformable and have minimal impact of the transfer of tension along the length of the streamer cable. A further advantage of such filler cords being positioned directly around the buoyant core is that where the buoyant core is interrupted to house a sensor, the connection of the data bearers to the sensor is made easier, because the angle at which the data bearers are connected is less acute than would be the case where the data bearers lie directly against the payload.

The gel filled layer is paper wrapped, with strips of paper helically wound over the gel filled layer to form a paper wrap 8 so as to ensure that the gel stays in place, and particularly during the assembly where the inner jacket layer is extruded over the paper wrap.

The first illustrated embodiment is generally constructed as outlined above. In this embodiment the strength members 5 are longitudinally aligned within the inner jacket 6. This arrangement has the advantage that the transfer of tension is somewhat removed from the gel filled layer 2 and isolates the gel filled layer from tension that may transfer somewhat into the milieu surrounded by the strength members. Furthermore upon winching the strain exerted upon the outer jacket 4 is transferred through the inner jacket and onto the strength members relatively directly and does not need to traverse the gel filled layer.

The filler cords of this first embodiment form a generally continuous layer around the buoyant core and have a tendency to keep the core in position. The data bearers 3 are braided and the angle of the braid is chosen so that the extent of compliance of streamer cable generally is matched by the braid such that the braid will not constrict around the filler cords on a load being applied to the streamer.

Thus to make such a streamer the buoyant core is extruded, the polypropylene filler cords are aligned around the core. The data bearers are braided around the filler cords and gel is filled into the interstices and over the braided data bearers. The gel is suitably prepared so as to have more gel-like characteristics, and that may include applying the gel when particularly cold, and some considerable time since the gel was last disturbed. The paper wrapper is wrapped around the gel filled layer. The strength members are then positioned in correct alignment and the inner jacket layer is extruded over them. After appropriate cooling the outer jacket is formed around the inner jacket by extrusion.

The second illustrated embodiment is similar to that of the first illustrated embodiment except that strength members are not located in the inner jacket, but are positioned within the gel filled layer and having a filler cord interspersed between each two adjacent strength members. The second embodiment isolated the data bearers to a lesser extent to that of the first embodiment.

Various features of the invention have been particularly shown and described in connection with the illustrated embodiments of the invention, however, it must be understood that these particular arrangements merely illustrate and that the invention is to be given its fullest interpretation within the terms of the appended claims.

## Claims

1. A towed array streamer of generally solid construction including an inner portion comprising a generally solid buoyant core (1), a gel filled layer (2) surrounding the buoyant core, a generally solid outer jacket (4) encasing the inner portion of the streamer, strength members (5) positioned within the streamer and spaced from the buoyant core (1) so as to transmit tension along the streamer, and databearers (3) within the gel filled layer, **characterised in that** the gel comprises a rheologically modifiable gel (2) and **in that** filler cord members (7) are provided within the layer (2) of rheologically modifiable gel longitudially in line with the buoyant core, the databearers comprising a layer separate from the filler members (7) such that the layer of gel (2) isolates the databearers (3) from the remainder of the cable and preventing a solid-solid interface.

2. A towed attay streamer as in claim 1 wherein the data bearers (3) comprise a plurality of data wires braided atound the buoyant cote (t).

3. A towed attay streamer as in claim 1 including a resilient inner jacket (6) around the gel filled layer (2), and said inner jacket forming part of the inner portion of the streamer and being encased by the outer jacket (1), the strength members (5) being longitudinally positioned and being embedded within the inner jacket.

4. A towed array streamer as in any one of the preceding claims wherein the means to encase the gel filled layer is a paper wrap (8).

5. A towed array streamer as in claim 1 wherein the strength members (5) are laid longitudinally within the gel filled layer (2) surrounding the buoyant core (1).

6. A method of making a towed array streamer including the steps of extruding a buoyant core (1), aligning a plurality of filler cord members (7) around and longitudinally in line with the buoyant core (1), braiding a plurality of data-bearer wires (3) around the filler members, filling gel throughout and over the data bearer wires, encasing the gel filled layer (2) with a casing (8), and including the step of aligning strength members spaced from the buoyant core and so as to transmit tension along the streamer thereby forming an inner portion of the towed streamer cable and forming an outer jacket over said inner portion the gel filled layer being provided such that the data bearer wires (3) are isolated from the remainder of the cable and preventing a solid-solid interface.

7. A method of making a towed array streamer as in claim 6 wherein the method includes the step of surrounding the casing (8) with an inner jacket layer (6), said inner jacket being part of the inner portion.

8. A method of making a towed array streamer as in claim 6 wherein the casing is formed by spirally wrapping the gel filled layer with a paper strip (8).

9. A method of making a towed array streamer as in claim 6 wherein strength members (5) are positioned in longitudinal alignment over the casing (8) before the step of forming the inner jacket (66), and the step of forming the inner jacket includes extruding the inner jacket around the strength members (5).

10. A method of making a towed array streamer cable as in claim 6 wherein the method includes the step of aligning a plurality of strength members (5) around the buoyant core (1), before the data bearer layer is formed.

11. A method of making a towed attay streamer as in claim 7 wherein the method includes the step of aligning a plurality of strength members (5) around the casing (1), before the inner jacket is formed.

## Patentansprüche

1. Schlepp-Wandlerkabel im Allgemeinen fester Konstruktion, die einen Innenabschnitt, der einen im Allgemeinen festen schwimmfähigen Kern (1), eine mit Gel gefüllte Schicht (2), die den schwimmfähigen Kern umgibt, eine im Allgemeinen feste äußere Ummantelung (4), die den inneren Abschnitt des Wandlerkabels umschließt, Verstärkungselemente (5), die in dem Wandlerkabel angeordnet und von dem schwimmfähigen Kern (1) beabstandet sind, um Spannung über das Wandlerkabel zu übertragen, sowie Datenträger (3) in der mit Gel gefüllten Schicht enthält, **dadurch gekennzeichnet, dass** das Gel ein rheologisch modifizierbares Gel (2) umfasst, und dass Füll-Seilelemente (7) in der Schicht (2) aus rheologisch modifizierbarem Gel längs auf den schwimmfähigen Kern ausgerichtet vorhanden sind, wobei die Datenträger eine von den Füllelementen (7) separate Schicht umfassen, so dass die Schicht aus Gel (2) die Datenträger (3) vom Rest des Kabels isoliert und eine Festkörper/Festkörper-Grenzfläche verhindert.

2. Schlepp-Wandlerkabel nach Anspruch 1, wobei die Datenträger (3) eine Vielzahl von Datendrähten umfassen, die um den schwimmfähigen Kem (1) herum geflochten sind.

3. Schlepp-Wandlerkabel nach Anspruch 1, das eine elastische innere Ummantelung (6) um die mit Gel gefüllte Schicht (2) herum enthält, wobei die innere Ummantelung Teil des inneren Abschnitts des Wandlerkabels ist und von der äußeren Ummantelung (4) umschlossen wird, und wobei die Verstärkungselemente (5) in Längsrichtung angeordnet und in der inneren Ummantelung eingebettet sind.

4. Schlepp-Wandlerkabel nach einem der vorangehenden Ansprüche, wobei die Einrichtung zum Umschließen der mit Gel gefüllten Schicht eine Papierumhüllung (8) ist.

5. Schlepp-Wandlerkabel nach Anspruch 1, wobei die Verstärkungselemente (5) längs in die mit Gel gefüllte Schicht (2) eingesetzt sind, die den schwimmfähigen Kern (1) umgibt.

6. Verfahren zum Herstellen eines Schlepp-Wandlerkabels, das die Schritte des Extrudierens eines schwimmfähigen Kems (1), des Ausrichtens einer Vielzahl von Füll-Seilelementen (7) um den schwimmfähigen Kern (1) herum und längs darauf ausgerichtet, des Flechtens einer Vielzahl von Datenträgerdrähten (3) um die Füllelemente, des Einfüllens von Gel durch und über die Datenträgerdrähte, des Umschließens der mit Gel gefüllten Schicht (2) mit einer Verkleidung (8) einschließt, und den Schritt des Ausrichtens von Verstärkungselementen einschließt, die von dem schwimmfähigen Kern beabstandet sind, so dass Spannung über das Wandlerkabel übertragen wird und ein innerer Abschnitt des Schlepp-Wandlerkabels ausgebildet wird und eine äußere Ummantelung um den inneren Abschnitt herum ausgebildet wird, wobei die mit Gel gefüllte Schicht so angeordnet ist, dass die Datenträgerdrähte (3) vom Rest des Kabels isoliert sind, und so eine Festkörper/Festkörper-Grenzfläche vermieden wird.

7. Verfahren zum Herstellen eines Schlepp-Wandlerkabels nach Anspruch 6, wobei das Verfahren den Schritt des Umgebens der Verkleidung (8) mit einer inneren Ummantelungsschicht (6) einschließt, wobei die innere Ummantelung Teil des inneren Abschnitts ist.

8. Verfahren zum Herstellen eines Schlepp-Wandlerkabels nach Anspruch 6, wobei die Verkleidung hergestellt wird, indem die mit Gel gefüllte Schicht spiralförmig mit einem Papierstreifen (8) umwickelt wird.

9. Verfahren zum Herstellen eines Schlepp-Wandlerkabels nach Anspruch 6, wobei die Verstärkungselemente (5) längs ausgerichtet über der Verkleidung (8) angeordnet werden, bevor die innere Ummantelung (6) ausgebildet wird, und der Schritt des Ausbildens der inneren Ummantelung das Extrudieren der inneren Ummantelung um die Verstärkungselemente (5) herum einschließt.

10. Verfahren zum Herstellen eines Schlepp-Wandlerkabels nach Anspruch 6, wobei das Verfahren den Schritt des Ausrichtens einer Vielzahl von Verstärkungselementen (5) um den schwimmfähigen Kern (1) herum, bevor die Datenträgerschicht ausgebildet wird, einschließt.

11. Verfahren zum Herstellen eines Schlepp-Wandlerkabels nach Anspruch 7, wobei das Verfahren den Schritt des Ausrichtens einer Vielzahl von Verstärkungselementen (5) um die Verkleidung (8) herum, bevor die innere Ummantelung ausgebildet wird, einschließt.

## Revendications

1. Flûte marine de réseau tractée, de construction généralement massive, incluant une partie intérieure comprenant une âme (1) flottante généralement massive, une couche remplie de gel (2) encourant l'âme flottante, une enveloppe extérieure (4) généralement massive, englobant la partie intérieure de la flûte, des éléments de résistance (5) placés à l'intérieur de la flûte et espacés de l'âme flottante (1) de façon à transmettre la tension le long de la flûte, et des supports de données (3) à l'intérieur de la couche remplie de gel, **caractérisée en ce que** le gel comprend un gel modifiable au plan rhéologique (2) et **en ce que** des éléments de cordons de remplissage (7) sont prévus à l'intérieur de la couche (2) de gel modifiable au plan rhéologique, et sont alignés dans le sens de la longueur avec l'âme flottante, les supports de données comprenant une couche séparée des éléments de remplissage (7) de telle sorte que la couche de gel (2) isole les supports de données (3) du reste du câble et empêche une interface solide-solide.

2. Flûte marine de réseau tractée selon la revendication 1, dans lequel les supports de données (3) comprennent une pluralité de câbles de données tressés autour de l'âme flottante (1).

3. Flûte marine de réseau tractée selon la revendication 1, incluant une enveloppe intérieure élastique (6) autour de la couche remplie de gel (2), et ladite enveloppe intérieure appartenant à la partie intérieure de la flûte marine et étant encastrée dans l'enveloppe extérieure (4), les éléments de résistance (5) étant positionnés dans le sens de la longueur et étant incrustés à l'intérieur de l'enveloppe intérieure.

4. Flûte marine de réseau tractée selon l'une quelconque des revendications précédentes, dans laquelle le moyen permettant d'encastrer la couche remplie de gel est un enrobage de papier (8).

5. Flûte marine de réseau tractée selon la revendication 1, dans laquelle les éléments de résistance (5) sont mis en place dans le sens de la longueur à l'intérieur de la couche remplie de gel (2) en entourant l'âme flottante (1).

6. Procédé de fabrication d'une flûte marine de réseau tractée incluant les étapes consistant à extruder une âme flottante (1), à aligner une pluralité d'éléments de cordons de remplissage (7) autour de, et alignés dans le sens de la longueur avec, l'âme flottante (1), à tresser une pluralité de câbles supports de données (3) autour des éléments de remplissage, à remplir de gel l'ensemble des câbles supports de données, à encastrer la couche remplie de gel (2) dans un boîtier (8), et incluant l'étape consistant à aligner des éléments de résistance espacés de l'âme flottante de façon à transmettre la tension le long de la flûte marine, en formant ainsi une partie intérieure du câble de la flûte marine de réseau tractée et formant une enveloppe extérieure sur ladite partie, la couche remplie de gel étant prévue de telle sorte que les câbles supports de données (3) sont isolés du reste du câble et empêchent une interface solide-solide.

7. Procédé de fabrication d'une flûte marine de réseau tractée selon la revendication 6, dans lequel le procédé inclut l'étape consistant à entourer le boîtier (8) d'une couche d'enveloppe intérieure (6), ladite enveloppe intérieure appartenant à la partie intérieure.

8. Procédé de fabrication d'une flûte marine de réseau tractée selon la revendication 6, dans lequel le boîtier est formé d'un enrobage en spirale de la couche remplie de gel réalisé avec une bande de papier (8).

9. Procédé de fabrication d'une flûte marine de réseau tractée selon la revendication 6, dans lequel les éléments de résistance (5) sont positionnés en un alignement dans le sens de la longueur sur le boîtier (8) avant l'étape consistant à former l'enveloppe intérieure (6), et l'étape consistant à former l'enveloppe intérieure inclut l'extrusion de l'enveloppe intérieure autour des éléments de résistance (5).

10. Procédé de fabrication d'une flûte marine de réseau tractée selon la revendication 6, dans lequel le procédé inclut l'étape consistant à aligner une pluralité d'éléments de résistance (5) autour de l'âme flottante (1), avant que la couche de supports de donnée soit formée.

11. Procédé de fabrication d'une flûte marine de réseau tractée selon la revendication 7, dans lequel le procédé inclut l'étape consistant à aligner une pluralité d'éléments de résistance (5) autour du boîtier (1), avant que l'enveloppe intérieure soit formée.
